# EUROPEAN PATENT APPLICATION

(11) **EP 4 550 243 A1**
(43) Date of publication of application: **07.05.2025**
(21) Application number: 24745334.3
(22) Date of filing: 01.05.2024
(51) Int. Cl.: G06Q 30/02, F25B 45/00, G06Q 10/20, G06Q 50/06

(54) **SERVER DEVICE, REFRIGERATION CYCLE SYSTEM, MANAGEMENT METHOD, AND MANAGEMENT PROGRAM**

(30) Priority: 13.09.2023 JP 2023148637
(71) Applicant: Daikin Industries, Ltd., Osaka-shi, Osaka 530-0001 (JP)
(72) Inventor: SAWADA, Ryunosuke, Osaka-shi, Osaka 530-0001 (JP); WASA, Shigekazu, Osaka-shi, Osaka 530-0001 (JP)
(74) Representative: Hoffmann Eitle
(86) International application number: PCT/JP2024/016761
(87) International publication number: WO 2025/057474

(57) **Abstract**

To implement a mechanism for refrigerant rental. A server device includes a control unit and a storage unit, wherein the control unit acquires an amount of refrigerant enclosed in a refrigeration cycle device and an identifier for identifying the refrigeration cycle device, determines a cost corresponding to the amount of refrigerant, and stores, in the storage unit, the amount of refrigerant, the cost, and the identifier in association with each other.

## Description

### TECHNICAL FIELD

The present disclosure relates to a server device, a refrigeration cycle system, a management method, and a management program.

### BACKGROUND ART

In the worldwide regulation of chlorofluorocarbons, refrigerants using chlorofluorocarbons are expected to be depleted of raw materials, and market prices thereof are currently rising. Therefore, in the refrigeration cycle systems, it is required to efficiently recycle the refrigerant.

As a mechanism for efficiently recycling the refrigerant, for example, a mechanism for renting the refrigerant to a user of the refrigeration cycle system is considered. This is because, in the refrigeration cycle system, the amount of refrigerant can be easily managed by separating a device from the refrigerant.

Meanwhile, various techniques have been proposed as management techniques for managing the amount of refrigerant.

### RELATED ART DOCUMENT

### PATENT DOCUMENT

Patent Document 1: WO 2019/234824

### SUMMARY OF THE INVENTION

### PROBLEMS TO BE SOLVED BY THE INVENTION

However, the related art management techniques appear to be a technique that focuses on a decrease in refrigeration capacity due to a decrease in the amount of refrigerant after the start of operation, and does not manage the initial amount of enclosed refrigerant, which should be managed when the refrigerant is rented. Therefore, the related art management techniques do not appear to determine the rental cost that should be determined at the time of the refrigerant rental before the start of the operation.

The present disclosure provides a server device, a refrigeration cycle system, a management method, and a management program that implement a scheme of refrigerant rental.

### MEANS FOR SOLVING THE PROBLEMS

A first aspect of the present disclosure is a server device that includes:
a control unit; and
a storage unit, where the control unit
   acquires an amount of refrigerant enclosed in a refrigeration cycle device and an identifier for identifying the refrigeration cycle device,
   determines a cost corresponding to the amount of refrigerant, and
   stores, in the storage unit, the amount of refrigerant, the cost, and the identifier in association with each other.

According to the first aspect of the present disclosure, it is possible to provide a server device that implements a mechanism of refrigerant rental.

A second aspect of the present disclosure is the server device according to the first aspect, where the control unit notifies a manager of the refrigeration cycle device of the cost.

A third aspect of the present disclosure is the server device according to the first or second aspect, where the control unit acquires an amount of refrigerant used in the refrigeration cycle device, out of the amount of refrigerant enclosed in the refrigeration cycle device before a start of operation of the refrigeration cycle device.

A fourth aspect of the present disclosure is the server device according to the third aspect, where the amount of refrigerant enclosed in the refrigeration cycle device includes
an amount of refrigerant charged in the refrigeration cycle device in advance before the refrigeration cycle device is installed, and
an amount of replenished refrigerant before operation is started, the refrigeration cycle device being installed.

A fifth aspect of the present disclosure is the server device according to any one of the first to fourth aspects,
where the control unit permits an operation of the refrigeration cycle device on condition that the cost has been paid, and
where the refrigeration cycle device starts operation when the operation is permitted.

A sixth aspect of the present disclosure is a refrigeration cycle system that includes:
a first control unit configured to manage a refrigeration cycle device; and
a server device including a second control unit and a storage unit, the second control unit being configured to communicate with the first control unit,
where the second control unit
   acquires, via the first control unit, an amount of refrigerant enclosed in the refrigeration cycle device and an identifier for identifying the refrigeration cycle device,
   determines a cost corresponding to the amount of refrigerant, and
   stores, in the storage unit, the amount of refrigerant, the cost, and the identifier in association with each other.

According to the sixth aspect of the present disclosure, it is possible to provide a refrigeration cycle system that implements a mechanism for refrigerant rental.

A seventh aspect of the present disclosure is the refrigeration cycle system according to the sixth aspect, where the refrigeration cycle device measures the amount of refrigerant enclosed therein, and transmits the measured amount of refrigerant to the second control unit via the first control unit in association with the identifier.

An eighth aspect of the present disclosure is the refrigeration cycle system according to the sixth or seventh aspect, where the amount of the refrigerant enclosed in the refrigeration cycle device includes
an amount of the refrigerant charged in the refrigeration cycle device in advance before the refrigeration cycle device is installed, and
an amount of the refrigerant replenished before operation is started, the refrigeration cycle device being installed.

A ninth aspect of the present disclosure is a management method that includes
causing a control unit to:
acquire an amount of refrigerant enclosed in a refrigeration cycle device and an identifier for identifying the refrigeration cycle device;
determine a cost corresponding to the amount of refrigerant; and
store the amount of refrigerant, the cost, and the identifier in a storage unit in association with each other.

According to the ninth aspect of the present disclosure, it is possible to provide a management method for implementing a mechanism of refrigerant rental.

A tenth aspect of the present disclosure is a management program for causing a control unit to execute a process, where the process includes:
acquiring an amount of a refrigerant enclosed in a refrigeration cycle device and an identifier for identifying the refrigeration cycle device;
determining a cost corresponding to the amount of refrigerant; and
storing the amount of refrigerant, the cost, and the identifier in a storage unit in association with each other.

According to the tenth aspect of the present disclosure, it is possible to provide a management program for implementing a mechanism of refrigerant rental.

### BRIEF DESCRIPTION OF THE DRAWINGS

[FIG. 1] FIG.1 is a first diagram illustrating an example of a system configuration of a refrigeration cycle system.
[FIG. 2A] FIG.2A is a diagram illustrating an example of a schematic configuration of a refrigeration cycle device.
[FIG. 2B] FIG.2B is a diagram illustrating an example of a system configuration of the refrigeration cycle device.
[FIG. 3A] FIG.3A is a diagram illustrating an example of hardware configurations of a server device and a network terminal.
[FIG. 3B] FIG.3B is a diagram illustrating an example of a hardware configuration of a controller of the refrigeration cycle device.
[FIG. 4] FIG.4 is a diagram illustrating an example of a functional configuration of the server device.
[FIG. 5] FIG.5 is a first diagram illustrating a specific example of a cost calculation process by a refrigerant amount acquisition unit, a cost determination unit, and a notification unit of the server device.
[FIG. 6] FIG.6 is a diagram illustrating a specific example of an operation permission/rejection management process by a payment information acquisition unit and an operation management unit of the server device.
[FIG. 7] FIG.7 is an example of a first sequence diagram illustrating a series of processes of the refrigeration cycle system.
[FIG. 8] FIG.8 is a second diagram illustrating an example of a system configuration of a refrigeration cycle system.
[FIG. 9] FIG.9 is a second diagram illustrating a specific example of a cost calculation process by a refrigerant amount acquisition unit, a cost determination unit, and a notification unit of a server device.
[FIG. 10] FIG.10 is an example of a second sequence diagram illustrating a series of processes of the refrigeration cycle system.

### EMBODIMENTS OF THE INVENTION

Hereinafter, each embodiment will be described with reference to the accompanying drawings. In the present specification and drawings, components having substantially the same functional configuration are denoted by the same reference numerals, and redundant description will be omitted.

### [First Embodiment]

### <System Configuration of Refrigeration Cycle System>

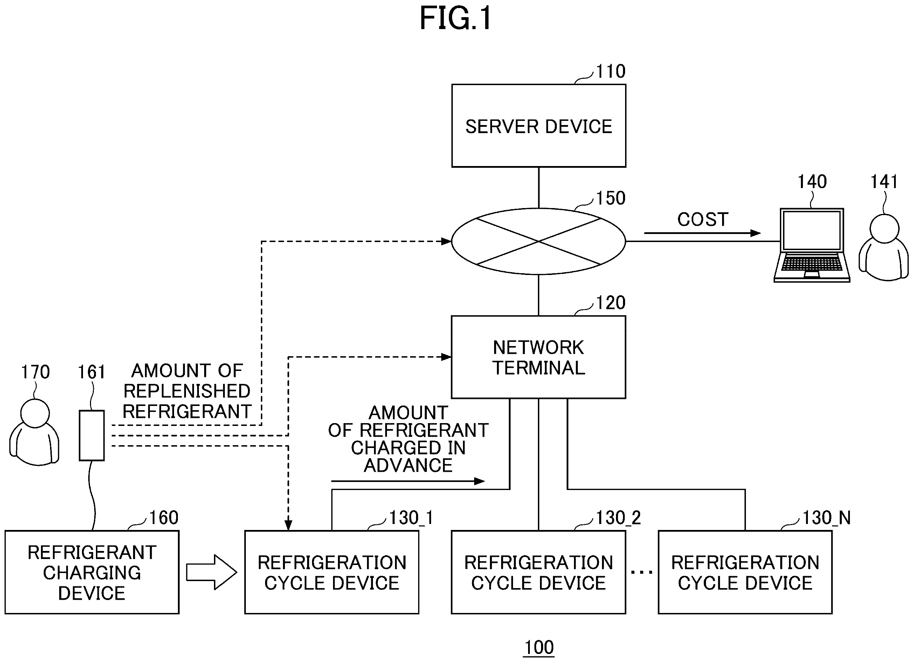

First, a system configuration of a refrigeration cycle system according to a first embodiment will be described. FIG. 1 is a first diagram illustrating an example of a system configuration of a refrigeration cycle system. As illustrated in FIG. 1, a refrigeration cycle system 100 includes a server device 110, a network terminal 120, and refrigeration cycle devices 130_1 to 130_N (N is an integer of 2 or more).

In the refrigeration cycle system 100, the server device 110 and the network terminal 120 are communicably connected to each other via a network 150. In the refrigeration cycle system 100, the network terminal 120 and the refrigeration cycle devices 130_1 to 130_N are communicably connected to each other via a network (not illustrated).

The server device 110 manages the refrigeration cycle devices 130_1 to 130_N. In the first embodiment, the server device 110 acquires and manages the amount of refrigerant (initial enclosed amount) enclosed in each of the refrigeration cycle devices 130_1 to 130_N at the time of performing the start-up process of each of the refrigeration cycle devices 130_1 to 130_N that have been installed.

At the time of performing the start-up process, the refrigerant amount (initial enclosed amount) of the refrigerant enclosed in each of the refrigeration cycle devices 130_1 to 130_N includes:
- an amount of the refrigerant charged in each of the refrigeration cycle devices 130_1 to 130_N in advance before a corresponding one of the refrigeration cycle devices 130_1 to 130_N is installed; and
- an amount of the refrigerant replenished before the operation is started, with each of the refrigeration cycle devices 130_1 to 130_N being installed.
That is, the initial enclosed amount is an appropriate amount of refrigerant for operating each refrigerant cycle device.

The length and thickness of the refrigerant pipe of each of the refrigeration cycle devices 130_1 to 130_N are finally determined by the installation work of a corresponding one of the refrigeration cycle devices 130_1 to 130_N. Therefore, as a result of the installation work, for example, when the length of the refrigerant pipe is longer than the length assumed in advance and the refrigerant needs to be replenished, an operator 170 replenishes the refrigerant on the site using a refrigerant charging device 160. Specifically, the refrigerant is replenished by connecting a refrigerant cylinder included in the refrigerant charging device 160 to a refrigerant replenishment service port provided in the outdoor unit of each of the refrigeration cycle devices 130_1 to 130_N.

The amount of the refrigerant replenished in this case is measured by the measuring instrument 161. The amount of the replenished refrigerant measured by the measuring instrument 161 is manually input to, for example, an operator terminal (not illustrated) owned by the operator 170. Thus, the amount of the replenished refrigerant is transmitted, via the operator terminal, to the refrigeration cycle devices 130_1 to 130_N, to the network terminal 120, or to the server device 110.

The server device 110 determines a cost corresponding to the initial enclosed amount for each of the refrigeration cycle devices 130_1 to 130_N based on the acquired initial amount of the enclosed refrigerant. The server device 110 stores the initial enclosed amount and the determined cost in association with an identifier for identifying each of the refrigeration cycle devices 130_1 to 130_N. Thus, the server device 110 can manage the cost determined by the initial enclosed amount as the rental cost for the refrigerant rental.

The server device 110 transmits the cost determined based on the initial enclosed amount to an owner terminal 140 owned by the owner 141 (an example of a manager) of the refrigeration cycle devices 130_1 to 130_N. Accordingly, the owner 141 of the refrigeration cycle devices 130_1 to 130_N can pay the rental cost for the refrigerant rental to the vendor of the refrigeration cycle devices 130_1 to 130 N.

The network terminal 120 transmits information received from each of the refrigeration cycle devices 130_1 to 130_N to the server device 110 via the network 150. The network terminal 120 transmits the information received from the server device 110 via the network 150 to the refrigeration cycle devices 130_1 to 130_N.

For example, it is assumed that when the network terminal 120 receives the amount of the refrigerant charged in advance from the refrigeration cycle device 130_1, the network terminal 120 transmits the received amount to the server device 110 via the network 150. It is also assumed that the amount of the replenished refrigerant measured by the measuring instrument 161 is transmitted to the refrigeration cycle device 130_1 via the operator terminal (not illustrated) owned by the operator 170. Alternatively, it is assumed that the amount of the replenished refrigerant measured by the measuring instrument 161 is transmitted to the network terminal 120 via the operator terminal (not illustrated) owned by the operator 170. In this case, the network terminal 120 also transmits the amount of the replenished refrigerant to the server device 110.

The refrigeration cycle devices 130_1 to 130_N are devices that condition air in a target space by using a refrigeration cycle in which thermal energy is circulated. As described above, the refrigeration cycle devices 130_1 to 130_N are charged with the refrigerant in advance, and a necessary amount of the refrigerant is replenished using the refrigerant charging device 160 for refrigerant at the time of installation. When the refrigeration cycle devices 130_1 to 130_N are installed and can communicate with the network terminal 120, the refrigeration cycle devices 130_1 to 130_N transmit the amounts of refrigerant charged in the refrigeration cycle devices in advance to the network terminal 120. When the refrigeration cycle devices 130_1 to 130_N are each replenished with a necessary amount of refrigerant using the refrigerant charging device 160 and the amounts of the replenished refrigerant are notified via the operator terminal (not illustrated) owned by the operator 170, the refrigeration cycle devices 130_1 to 130_N receive the notifications. Further, the refrigeration cycle devices 130_1 to 130_N then transmit the received refrigerant amounts (the amount of the replenished refrigerant) to the network terminal 120.

The owner terminal 140 is a terminal owned by an owner 141 of the refrigeration cycle system 100. The owner terminal 140 communicates with the server device 110 via the network 150. Accordingly, the owner terminal 140 receives the cost corresponding to the initial amount of enclosed refrigerant in each of the refrigeration cycle devices 130_1 to 130_N from the server device 110. The owner 141 pays the received cost to the company that owns the refrigerant as a rental cost for the refrigerant rental.

As described above, in the refrigeration cycle system according to the related art, a cost of the refrigerant charged in advance is included in a cost of the refrigeration cycle device, and thus the initial amount of the enclosed refrigerant is not managed. However, the server device 110 according to the first embodiment
- manages an initial amount of enclosed refrigerant in the refrigerant rental; and
- determines the rental cost that should be determined at the time of refrigerant rental before the operation is started.

As a result, the server device 110 according to the first embodiment can implement a mechanism for refrigerant rental.

### <Outline of Refrigeration cycle device>

Next, a schematic configuration of the refrigeration cycle devices 130_1 to 130_N will be described. In the first embodiment, the refrigeration cycle devices 130_1 to 130_N are all refrigeration cycle devices of the same type, and thus, a schematic configuration of the refrigeration cycle device 130_1 will be described as a representative below.

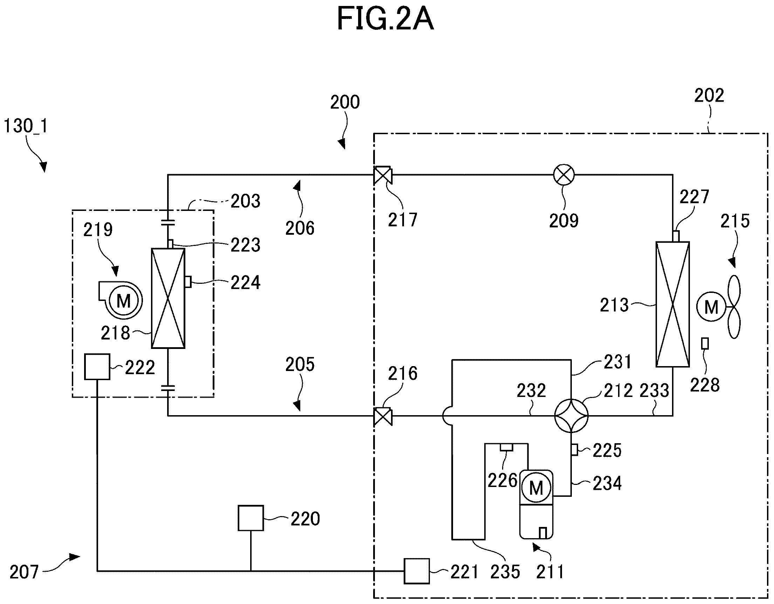

FIG. 2A is a diagram illustrating an example of a schematic configuration of a refrigeration cycle device. As illustrated in FIG. 2A, the refrigeration cycle device 130_1 mainly includes an outdoor unit 202 and an indoor unit 203. The refrigeration cycle device 130_1 also includes a liquid refrigerant communication pipe 206 and a gas refrigerant communication pipe 205 that are refrigerant pipes connecting the outdoor unit 202 and the indoor unit 203, and a controller 207 that controls an operation of the entire refrigeration cycle device 130_1.

In the refrigeration cycle device 130_1, a refrigeration cycle is performed in which the refrigerant charged in a refrigerant circuit 200 is compressed, condensed or dissipates heat, decompressed, evaporated, and then compressed again. In the first embodiment, the refrigerant circuit 200 is charged with a refrigerant for performing a vapor compression refrigeration cycle.

The refrigerant charged in the refrigerant circuit 200 is at least one of the following refrigerants:
- a mixed refrigerant containing 1,2-difluoroethylene and one or more hydrofluorocarbons;
- a mixed refrigerant containing 1,2-difluoroethylene and one or more hydrofluoroolefins; and
- a mixed refrigerant containing one or more hydrofluorocarbons and one or more hydrofluoroolefins.

The outdoor unit 202 is connected to the indoor unit 203 via the liquid refrigerant communication pipe 206 and the gas refrigerant communication pipe 205, and forms a part of the refrigerant circuit 200. The outdoor unit 202 mainly includes a compressor 211, a four way switching valve 212, an outdoor heat exchanger 213, an expansion valve 209, an outdoor fan 215, a liquid-side shutoff valve 217, and a gas-side stop valve 216.

The compressor 211 is a device that compresses a low-pressure refrigerant in the refrigeration cycle until it reaches a high pressure. As the compressor 211, for example, a compressor in which a rotary type or scroll type compression element is rotationally driven by a compressor motor can be used. The compressor motor is used to change the capacity, and its operating frequency can be controlled by an inverter. The compressor 211 is controlled in rotation speed with a predetermined target evaporation temperature as a target value during cooling operation, and is controlled in rotation speed with a predetermined target condensation temperature as a target value during heating operation, for example.

The four way switching valve 212 switches following connection states in the refrigerant circuit 200:
- a first connection state in which a suction side of the compressor 211 and the gas-side stop valve 216 are connected while a discharge side of the compressor 211 and the outdoor heat exchanger 213 are connected; and
- a second connection state in which the suction side of the compressor 211 and the outdoor heat exchanger 213 are connected while the discharge side of the compressor 211 and the gas-side stop valve 216 are connected.

The outdoor heat exchanger 213 is a heat exchanger that functions as a condenser or a radiator of a high-pressure refrigerant in the refrigeration cycle during the cooling operation, and functions as an evaporator of a low-pressure refrigerant in the refrigeration cycle during the heating operation. The outdoor heat exchanger 213 includes a plurality of heat transfer tubes (not illustrated) through which the refrigerant flows and a plurality of heat transfer fins (not illustrated) through which air flows. The plurality of heat transfer tubes are arranged in the vertical direction, and each heat transfer tube extends substantially in the horizontal direction. The plurality of heat transfer fins extending in the vertical direction are arranged at predetermined intervals along the direction in which the heat transfer tube extends. The plurality of heat transfer fins and the plurality of heat transfer tubes are combined such that the plurality of heat transfer tubes penetrate each heat transfer fin.

The outdoor fan 215 supplies outdoor air to the outdoor heat exchanger 213 to exchange heat with the refrigerant in the outdoor heat exchanger 213, and then generates an air flow to discharge the exchanged heat outside the outdoor unit 202. The outdoor fan 215 is rotationally driven by an outdoor fan motor.

The expansion valve 209 is provided between a liquid-side end of the outdoor heat exchanger 213 and the liquid-side shutoff valve 217. The expansion valve 209 is, for example, an electronic expansion valve that can adjust a valve opening degree by control.

The liquid-side shutoff valve 217 is a manual valve disposed at a connection portion with the liquid refrigerant communication pipe 206 in the outdoor unit 202.

The gas-side stop valve 216 is a manual valve disposed at the connection portion with the gas refrigerant communication pipe 205 in the outdoor unit 202.

The outdoor unit 202 has an outdoor unit control unit 221 that controls the operations of respective units forming the outdoor unit 202. The outdoor unit control unit 221 is connected to an indoor unit control unit 222 of the indoor unit 203 via a communication line, and transmits and receives control signals and the like.

The outdoor unit 202 is provided with a discharge temperature sensor 225, a suction temperature sensor 226, an outdoor heat exchanger temperature sensor 227, an outdoor air temperature sensor 228, and the like. Each of these sensors is electrically connected to the outdoor unit control unit 221, and transmits a detection signal to the outdoor unit control unit 221. The discharge temperature sensor 225 detects the temperature of the refrigerant flowing through the discharge pipe 234 connecting the discharge side of the compressor 211 and one of the connection ports of the four way switching valve 212. The suction temperature sensor 226 detects the temperature of the refrigerant flowing through a suction pipe 235 in the suction flow path connecting the suction side of the compressor 211 and one of the connection ports of the four way switching valve 212. The outdoor heat exchanger temperature sensor 227 detects the temperature of the refrigerant flowing through the outlet on the liquid side of the outdoor heat exchanger 213 that is the opposite side from the side to which the third pipe 233 is connected. The outdoor air temperature sensor 228 detects the temperature of outdoor air before passing through the outdoor heat exchanger 213.

The indoor unit 203 is installed on a wall surface, a ceiling, or the like in a room that is a target space. The indoor unit 203 is connected to the outdoor unit 202 via the liquid refrigerant communication pipe 206 and the gas refrigerant communication pipe 205, and forms a part of the refrigerant circuit 200.

The indoor unit 203 includes an indoor heat exchanger 218 and an indoor fan 219.

The liquid side of the indoor heat exchanger 218 is connected to the liquid refrigerant communication pipe 206, and a gas side end of the indoor heat exchanger 218 is connected to the gas refrigerant communication pipe 205. The indoor heat exchanger 218 is a heat exchanger that functions as an evaporator of a low-pressure refrigerant in the refrigeration cycle during the cooling operation, and functions as a condenser or a radiator of a high-pressure refrigerant in the refrigeration cycle during the heating operation.

The indoor fan 219 generates an air flow for suctioning indoor air of a target space into the indoor unit 203, exchanging heat with the refrigerant in the indoor heat exchanger 218, and then discharging the air to the outside of the indoor unit 203. The indoor fan 219 is rotationally driven by an indoor fan motor.

The indoor unit 203 also includes the indoor unit control unit 222 that controls the operation of each unit forming the indoor unit 203. The indoor unit control unit 222 is connected to the outdoor unit control unit 221 via a communication line, and transmits and receives control signals and the like.

The indoor unit 203 is provided with an indoor liquid side heat exchanger temperature sensor 223, an indoor air temperature sensor 224, and the like. Each of these sensors is electrically connected to the indoor unit control unit 222. The indoor liquid side heat exchanger temperature sensor 223 detects the temperature of the refrigerant flowing through the outlet on the liquid side of the indoor heat exchanger 218 that is the opposite side from the side to which the gas refrigerant communication pipe 205 is connected. The indoor air temperature sensor 224 detects the temperature of the indoor air before passing through the indoor heat exchanger 218.

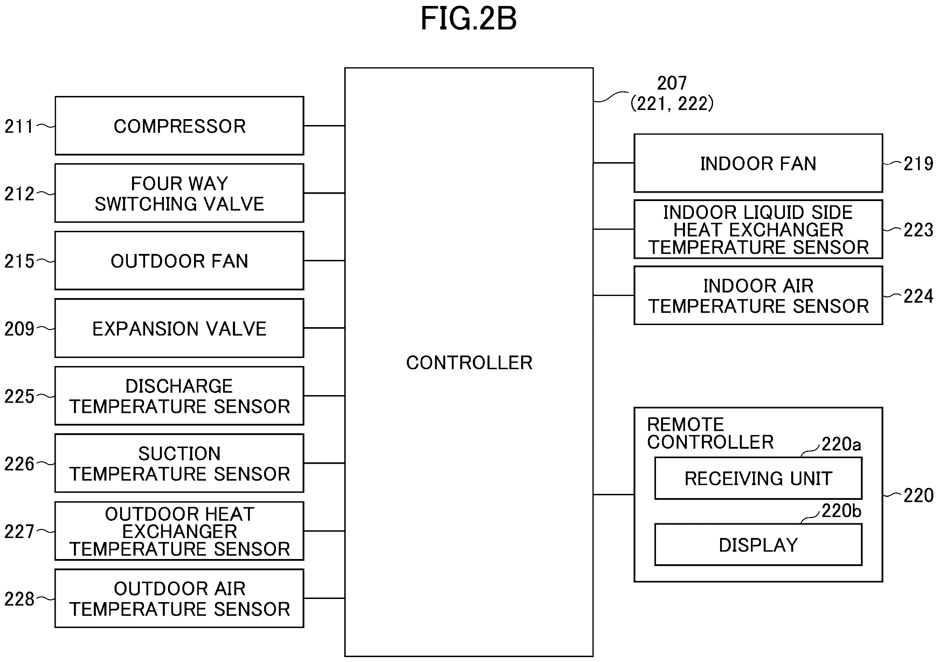

Next, a system configuration of the refrigeration cycle device 130_1 will be described. FIG. 2B is a diagram illustrating an example of a system configuration of the refrigeration cycle device. In the refrigeration cycle device 130_1, the controller 207 is configured by connecting the outdoor unit control unit 221 and the indoor unit control unit 222 via a communication line.

Various processes and controls by the controller 207 are implemented by the respective units included in the outdoor unit control unit 221 and the indoor unit control unit 222 functioning integrally. The remote controller 220 is disposed in a room as a target space or in a specific space of a building including the target space, and is used by a user or the like to issue an operation control instruction to the refrigeration cycle device 130_1 or to monitor the operation state of the refrigeration cycle device 130_1.

The remote controller 220 includes a reception unit 220a such as an operation button or a touch panel that receives input of information by being operated by a user or the like, and a display 220b that can display various kinds of information. The remote controller 220 is connected to the outdoor unit control unit 221 and the indoor unit control unit 222 via a communication line, and can supply information received from the user at the reception unit 220a to the controller 207. Further, information received from the controller 207 can be output on the display 220b.

The information received by the reception unit 220a from the user or the like is not particularly specified, but various kinds of information such as an instruction to execute a cooling operation mode, an instruction to execute a heating operation mode, an instruction to stop the operation, and designation of a setting temperature are exemplified. The information displayed on the display 220b is not particularly specified, but may include information indicating the current state of the operation mode (cooling or heating), the setting temperature, and the occurrence of various abnormalities.

### <Hardware Configuration of Each Device>

Next, a hardware configuration of each device (here, the server device 110, the network terminal 120, and the controller 207) forming the refrigeration cycle system 100 will be described.

### (1) Hardware Configuration of Server Device and Network Terminal

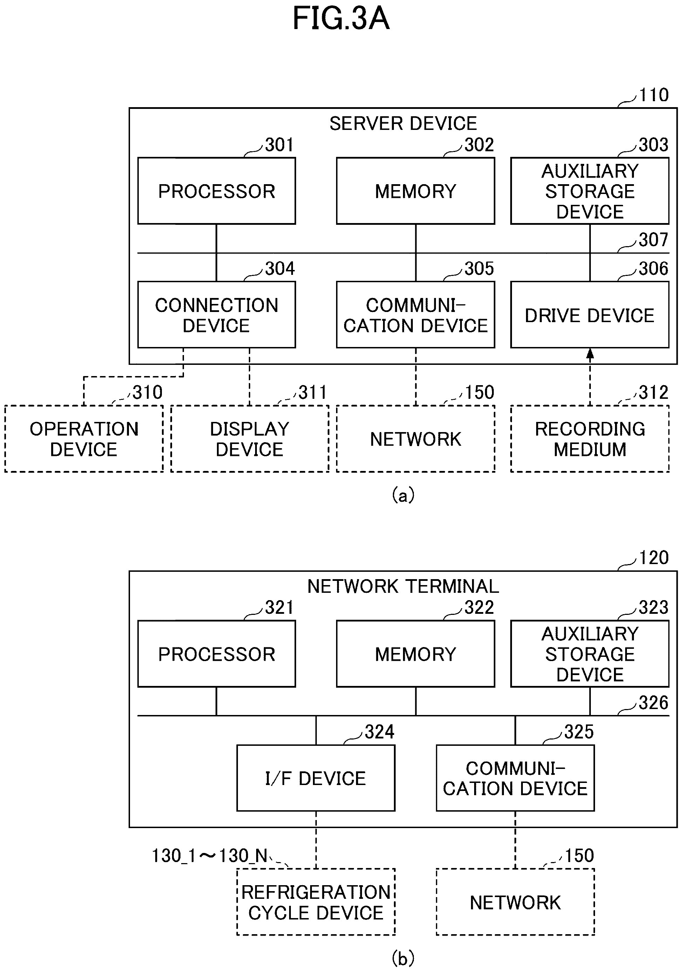

FIG. 3A is a diagram illustrating an example of a hardware configuration of the server device and the network terminals. As illustrated in (a) of FIG. 3A, the server device 110 includes a processor 301, a memory 302, an auxiliary storage device 303, a connection device 304, a communication device 305, and a drive device 306. The hardware components of the server device 110 are connected to each other via a bus 307.

The processor 301 includes various computing devices such as a central processing unit (CPU). The processor 301 loads various programs (for example, a management program) onto the memory 302 and executes the programs.

The memory 302 includes a main storage device such as a read only memory (ROM) or a random access memory (RAM). The processor 301 and the memory 302 form a so-called computer (also referred to as a "control unit" or a "second control unit"), and the processor 301 executes various programs loaded on the memory 302, whereby the computer implements various functions.

The auxiliary storage device 303 stores various programs and various kinds of information used when the various programs are executed by the processor 301.

The connection device 304 connects an operation device 310 and the display device 311 to the server device 110.

The communication device 305 is a device for connecting to the network 150 and communicating with the network terminal 120 or the owner terminal 140.

The drive device 306 is a device for setting a recording medium 312. The recording medium 312 includes a medium for optically, electrically, or magnetically recording information, such as a CD-ROM, a flexible disk, or a magneto-optical disk. The recording medium 312 may include a semiconductor memory or the like that electrically records information, such as a ROM or a flash memory.

The various programs installed in the auxiliary storage device 303 are installed by, for example, setting the distributed recording medium 312 in the drive device 306 and reading the various programs recorded in the recording medium 312 by the drive device 306. Alternatively, the various programs installed in the auxiliary storage device 303 may be installed by being downloaded from the network 150 via the communication device 305.

As illustrated in (b) of FIG. 3A, the network terminal 120 includes a processor 321, a memory 322, an auxiliary storage device 323, an interface (I/F) device 324, and a communication device 325. The hardware components of the network terminal 120 are connected to each other via a bus 326.

Among these, the processor 321 to the auxiliary storage device 323 and the communication device 325 are the same as the processor 301 to the auxiliary storage device 303 and the communication device 305 of the server device 110, respectively, and thus the description thereof will be omitted here.

In the network terminal 120, the processor 321 and the memory 322 form a so-called computer (also referred to as a "first control unit"). The processor 321 executes the various programs read out onto the memory 322, whereby the computer implements various functions.

The I/F device 324 connects the refrigeration cycle devices 130_1 to 130_N to the network terminal 120.

### (2) Hardware Configuration of Controller

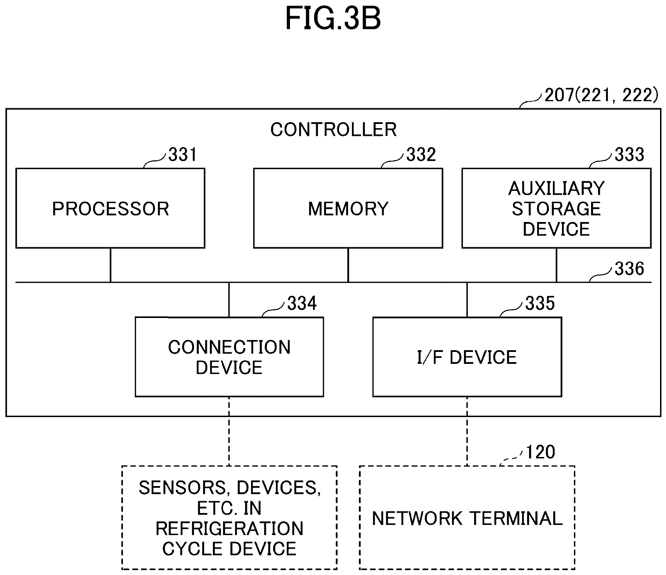

FIG. 3B is a diagram illustrating an example of a hardware configuration of a controller of the refrigeration cycle device. As illustrated in FIG. 3B, the outdoor unit control unit 221 and the indoor unit control unit 222 forming the controller 207 each include a processor 331, a memory 332, an auxiliary storage device 333, a connection device 334, and an I/F device 335. The hardware of the outdoor unit control unit 221 and the indoor unit control unit 222 forming the controller 207 are connected to each other via a bus 336.

Among these, the processor 331 to the auxiliary storage device 333 and the I/F device 335 are the same as the processor 321 to the auxiliary storage device 323 and the I/F device 324 of the network terminal 120, respectively, and thus the description thereof will be omitted here.

However, in the outdoor unit control unit 221 and the indoor unit control unit 222 configuring the controller 207, the processor 331 and the memory 332 form a so-called computer (also referred to as a "first control unit"). The processor 331 executes the various programs loaded on the memory 332, whereby the computer implements various functions.

The connection device 334 connects the sensors, devices, and the like in the refrigeration cycle device 130_1 to the outdoor unit control unit 221 and the indoor unit control unit 222 forming the controller 207.

<Functional Configuration of Server Device>

Next, a functional configuration of the server device 110 will be described. As described above, a management program is installed in the server device 110, and the server device 110 functions as a refrigerant amount acquisition unit 401, a cost determination unit 402, a notification unit 403, a payment information acquisition unit 411, and an operation management unit 412 by executing the program.

The refrigerant amount acquisition unit 401 acquires the amount (initial enclosed amount) of the refrigerant enclosed in each of the refrigeration cycle devices 130_1 to 130_N in association with an identifier for identifying a corresponding one of the refrigeration cycle devices 130_1 to 130_N. As described above, the amount (initial enclosed amount) of the refrigerant enclosed in each of the refrigeration cycle devices 130_1 to 130_N includes:
- the amount of the refrigerant charged in each of the refrigeration cycle devices 130_1 to 130_N in advance before a corresponding one of the refrigeration cycle devices 130_1 to 130_N is installed; and
- the amount of the refrigerant replenished to each of the refrigeration cycle devices 130_1 to 130_N before the operation is started, with each of the refrigeration cycle devices 130_1 to 130_N being installed.

As described above, a method of acquiring the initial amount of enclosed refrigerant by the refrigerant amount acquisition unit 401 includes:
- a method of acquiring the information from the network terminal 120; and
- a method of acquiring the amount of the refrigerant charged in advance from the network terminal 120 and acquiring the amount of the refrigerant replenished before the start of operation from the operator terminal owned by the operator 170.

The refrigerant amount acquisition unit 401 notifies the cost determination unit 402 of the acquired initial amount of enclosed refrigerant and the identifier of the refrigeration cycle device.

The cost determination unit 402 stores the initial enclosed amount and the identifier notified by the refrigerant amount acquisition unit 401 in a cost storage unit 404. The cost determination unit 402 calculates the cost corresponding to the initial amount of enclosed refrigerant by multiplying the initial amount of enclosed refrigerant notified by the refrigerant amount acquisition unit 401 by the unit price per unit amount of refrigerant, and stores the cost in the cost storage unit 404. In this case, it is assumed that the unit price per unit amount of the refrigerant is set in advance in the cost determination unit 402.

Alternatively, the cost determination unit 402 derives the cost corresponding to the initial amount of enclosed refrigerant by comparing the initial amount of enclosed refrigerant notified by the refrigerant amount acquisition unit 401 with a table defining the relationship between the amount of refrigerant and the amount of money, and stores the cost in the cost storage unit 404. In this case, it is assumed that the cost determination unit 402 holds in advance a table in which the amount of money is assigned to each range of the amount of refrigerant, for example, "XX yen" for "range from 5kg to 10kg".

The cost determination unit 402 reads the cost corresponding to the initial amount of enclosed refrigerant and the identifier of the refrigeration cycle device from the cost storage unit 404 at an appropriate timing when the start-up process of the refrigeration cycle devices 130_1 to 130_N is performed, and notifies the notification unit 403 of the cost and the identifier.

The notification unit 403 transmits the cost corresponding to the initial amount of the refrigerant and the identifier of the refrigeration cycle device to the owner terminal 140 of the owner 141 of the refrigeration cycle device 130_1 to 130_N, and prompts the owner to pay the rental cost for the refrigerant rental. The notification unit 403 notifies the payment information acquisition unit 411 of the cost corresponding to the initial amount of enclosed refrigerant and the identifier of the refrigeration cycle device.

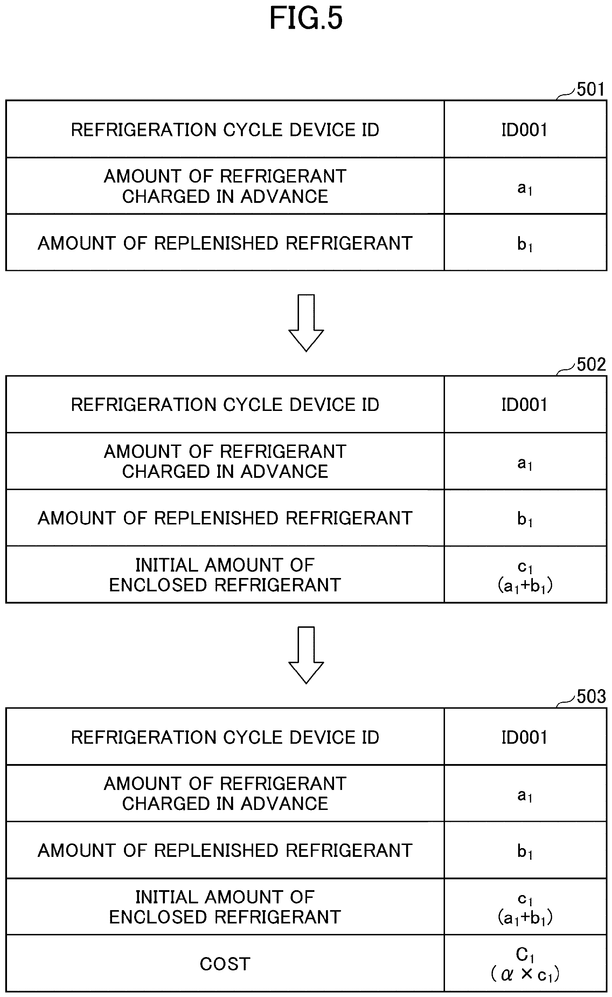

FIG. 5 is a first diagram illustrating a specific example of a cost calculation process performed by the refrigerant amount acquisition unit, the cost determination unit, and the notification unit of the server device. Here, a specific example of the cost calculation process for the refrigeration cycle device 130_1 is illustrated. As indicated by reference numeral 501, the refrigerant amount acquisition unit 401 acquires:
- the identifier of the refrigeration cycle device 130_1 = "ID001";
- the amount of refrigerant charged in advance in the refrigeration cycle device 130_1 = "a₁"; and
- the amount of replenished refrigerant to the refrigeration cycle device 130_1 = "b₁", and
calculates the initial amount of enclosed refrigerant = "c₁" (a₁ + b₁) as indicated by reference numeral 502.

As indicated by reference numeral 503, the cost determination unit 402 determines the cost = "C₁" corresponding to the initial amount of the enclosed refrigerant by multiplying the initial amount of the enclosed refrigerant = "c₁" by the unit price per unit amount of the refrigerant = "α".

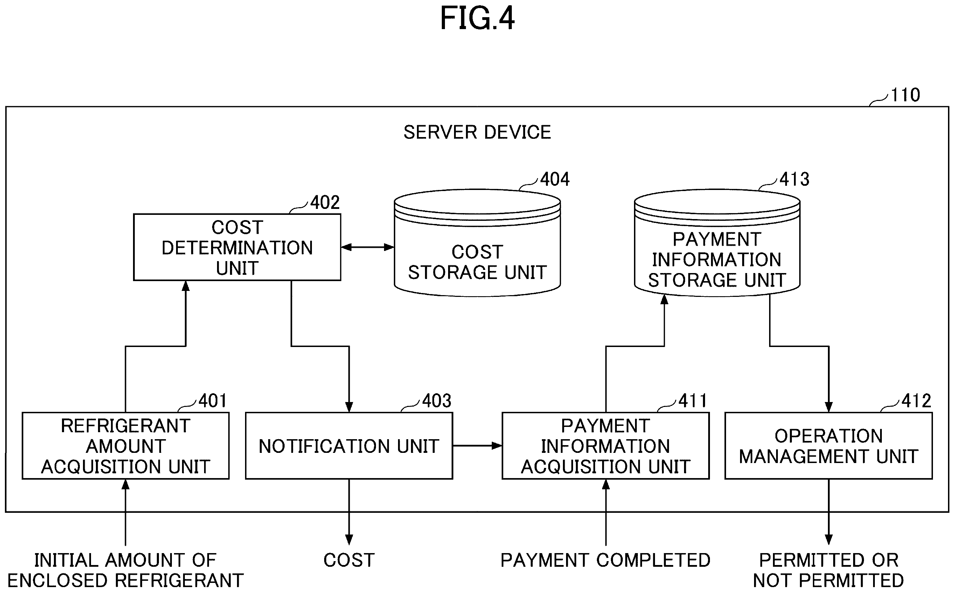

The description returns to FIG. 4. The payment information acquisition unit 411 acquires a notification of payment completion when the owner 141 pays the rental cost for the refrigerant rental in response to the notification unit 403 transmitting the cost corresponding to the initial amount of the enclosed refrigerant to the owner terminal 140. For example, the payment information acquisition unit 411 acquires the notification of completion of payment of the rental cost for the refrigerant rental for each of the refrigeration cycle devices 130_1 to 130_N from a transfer destination institution or the like. The payment information acquisition unit 411 stores the notification of the payment completion in a payment information storage unit 413.

The operation management unit 412 determines whether to permit the operation of each of the refrigeration cycle devices 130_1 to 130_N based on the notification of the payment completion stored in the payment information storage unit 413. The operation management unit 412 monitors a payment status of the owner 141 by accessing the payment information storage unit 413 at a predetermined cycle, for example, and permits the refrigeration cycle device for which the payment has been completed to operate.

When receiving the instruction to start the operation, each of the refrigeration cycle devices 130_1 to 130_N accesses the operation management unit 412, and performs control to start the operation upon the operation being permitted, or performs control not to start the operation upon the operation being not permitted.

Alternatively, the operation management unit 412 may transmit a determination result (permitted or not permitted) as to whether to permit the operation to each of the refrigeration cycle devices 130_1 to 130_N. In this case, when the refrigeration cycle devices 130_1 to 130_N receive an instruction to start operation, the refrigeration cycle devices 130_1 to 130_N start operation upon receiving a notification of "permitted", and control not to start operation upon receiving a notification of "not permitted".

Alternatively, the operation management unit 412 may notify a determination result (permitted or not permitted) as to whether to permit the operation to the operator terminal (not illustrated) of the operator 170, and the operator 170 may directly set the refrigeration cycle devices 130_1 to 130_N to be operable or inoperable.

Note that the instruction to start the operation is given by, for example, the user of the refrigeration cycle devices 130_1 to 130_N.

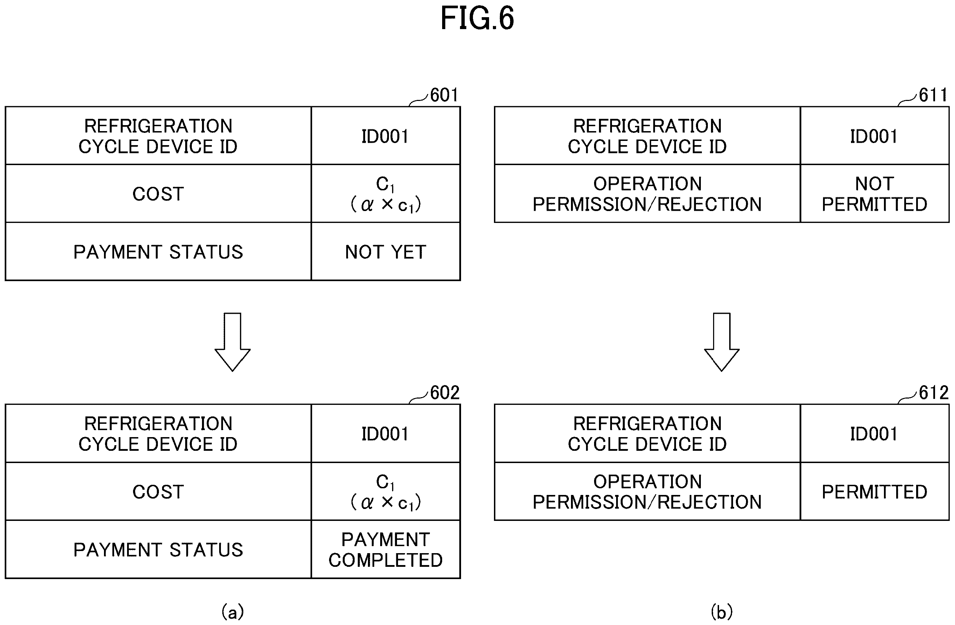

FIG. 6 is a diagram illustrating a specific example of an operation permission/rejection management process by the payment information acquisition unit and the operation management unit of the server device. Here, a specific example of the operation permission/inhibition management process for the refrigeration cycle device 130_1 is illustrated. As indicated by a reference numeral 601 in (a) of FIG. 6, when the cost corresponding to the initial amount of enclosed refrigerant and the identifier of the refrigeration cycle device are notified from the notification unit 403, the payment information acquisition unit 411 stores the payment status = "not yet" in the payment information storage unit 413.

Thereafter, when the payment of the rental cost for the refrigerant rental by the owner 141 is completed and the payment completion notification is acquired, the payment information acquisition unit 411 updates the payment status to "payment completed" as indicated by a reference numeral 602.

The operation management unit 412 accesses the payment information storage unit 413 at a predetermined cycle to check the payment status and holds the determination result of the permission or rejection of the operation. A reference numeral 611 in (b) of FIG. 6 indicates a determination result in a case where the payment information storage unit 413 is accessed at a timing at which the payment status indicated by the reference numeral 601 is stored. In this case, the operation management unit 412 determines that the operation is not permitted, and thus "not permitted" is held in the operation permission/rejection as indicated by the reference numeral 611.

In contrast, a reference numeral 612 in (b) of FIG. 6 indicates a determination result in a case where access is made at a timing at which the payment status indicated by the reference numeral 602 is stored in the payment information storage unit 413. In this case, the operation management unit 412 determines that the operation is permitted, and thus "permitted" is held in the operation permission/rejection as indicated by the reference numeral 612.

In this way, the operation management unit 412 permits the operation of the refrigeration cycle device on condition that the rental cost for the refrigerant rental has been paid in response to the transmission of the cost corresponding to the initial amount of enclosed refrigerant.

### <Series of Processes of Refrigeration Cycle System>

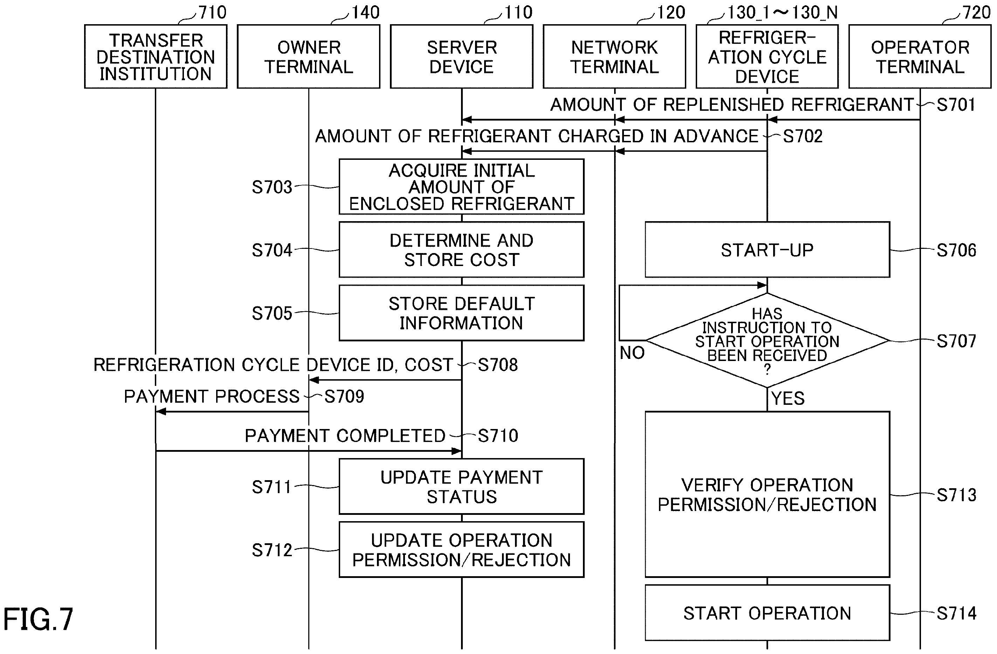

Next, a series of processes of the refrigeration cycle system 100 from installation of the refrigeration cycle devices 130_1 to 130_N to start of operation will be described. FIG. 7 is an example of a first sequence diagram illustrating a series of processes of the refrigeration cycle system.

In step S701, the operator 170 replenishes the refrigeration cycle devices 130_1 to 130_N with the refrigerant using the refrigerant charging device 160, and measures the amount of the replenished refrigerant. The operator 170 also transmits the amount of the replenished refrigerant to the server device 110 in association with the identifier of each of the refrigeration cycle devices 130_1 to 130_N. The operator 170 transmits the amount of the replenished refrigerant and the identifier to the server device 110 by using the operator terminal 720. Alternatively, the operator 170 transmits the amount of the replenished refrigerant and the identifier to the server device 110 via the network terminal 120 by using the operator terminal 720. Alternatively, the operator 170 transmits the amount of the replenished refrigerant and the identifier to the server device 110 via the refrigeration cycle devices 130_1 to 130_N and the network terminal 120 by using the operator terminal 720.

In step S702, the refrigeration cycle devices 130_1 to 130_N each transmit the amount of the refrigerant charged in advance to the server device 110 via the network terminals 120.

In step S703, the server device 110 acquires the initial amount of enclosed refrigerant in each of the refrigeration cycle devices 130_1 to 130_N.

In step S704, the server device 110 determines the cost corresponding to the initial amount of enclosed refrigerant, and stores the cost in the cost storage unit 404.

In step S705, the server device 110 stores default information ("not yet") in the payment status and holds default information ("not permitted") in the operation permission/rejection in the payment information storage unit 413.

In step S706, the refrigeration cycle devices 130_1 to 130_N perform a start-up process.

In step S707, the refrigeration cycle devices 130_1 to 130_N determine whether an instruction to start operation has been received. When the refrigeration cycle devices 130_1 to 130_N each determine in step S707 that the instruction to start the operation has not been received (NO in step S707), the process waits until the instruction to start the operation is received. When the refrigeration cycle devices 130_1 to 130_N each determine in step S707 that the instruction to start the operation has been received (YES in step S707), the process proceeds to step S713.

In step S708, the server device 110 transmits the identifiers of the refrigeration cycle devices 130_1 to 130_N and the cost corresponding to the initial amount of the enclosed refrigerant to the owner terminal 140.

In step S709, the owner 141 having the owner terminal 140 pays the rental cost for the refrigerant rental by transferring the rental cost to the transfer destination institution 710 or the like.

In step S710, the transfer destination institution 710 or the like notifies the server device 110 that the payment of the cost by the owner 141 has been completed.

In step S711, in response to the acquisition of the notification of the payment completion, the server device 110 updates "not yet" stored in the payment status of the payment information storage unit 413 to "payment completed".

In step S712, the server device 110 updates "not permitted" held in the operation permission/rejection to "permitted" in response to the update of the payment status.

In step S713, the refrigeration cycle devices 130_1 to 130_N access the server device 110 and verify whether to permit the operation. As a result of the verification, when the operation permission/rejection = "not permitted" is held, the refrigeration cycle devices 130_1 to 130_N do not start the operation. When the operation permission/rejection = "permitted" is held, the refrigeration cycle devices 130_1 to 130_N start the operation in step S714.

### <Conclusion>

As is clear from the above description, the server device 110 according to the first embodiment
- acquires an initial amount of enclosed refrigerant enclosed in the refrigeration cycle device (an amount of refrigerant charged in advance and an amount of replenished refrigerant) and an identifier for identifying the refrigeration cycle device are acquired,
- determines a cost corresponding to the initial amount of enclosed refrigerant, and
- stores the initial amount of enclosed refrigerant, the cost corresponding to the initial amount of enclosed refrigerant, and the identifier in the cost storage unit in association with each other.

As described above, the server device 110 according to the first embodiment manages the initial amount of enclosed refrigerant that should be managed at the time of refrigerant rental, and determines the rental cost that should be determined at the time of refrigerant rental before the start of operation. As a result, the server device 110 according to the first embodiment can implement a mechanism for refrigerant rental.

### [Second Embodiment]

In the first embodiment, the amount of the refrigerant replenished to each of the refrigeration cycle devices 130_1 to 130_N by using the refrigerant charging device 160 is transmitted via the operator terminal 720 of the operator 170. However, the method by which the server device 110 acquires the initial amount of enclosed refrigerant is not limited to this method.

For example, a configuration may be adopted in which, when the refrigeration cycle devices 130_1 to 130_N perform a start-up process after the refrigerant is replenished using the refrigerant charging device 160, each of the refrigeration cycle devices 130_1 to 130_N measures the amount of refrigerant in the refrigeration cycle devices 130_1 to 130_N. Thus, the server device 110 can acquire the amount of the refrigerant measured by each of the refrigeration cycle devices 130_1 to 130_N as the initial enclosed amount. The second embodiment will be described below, focusing on the differences from the first embodiment.

### <System Configuration of Refrigeration Cycle System>

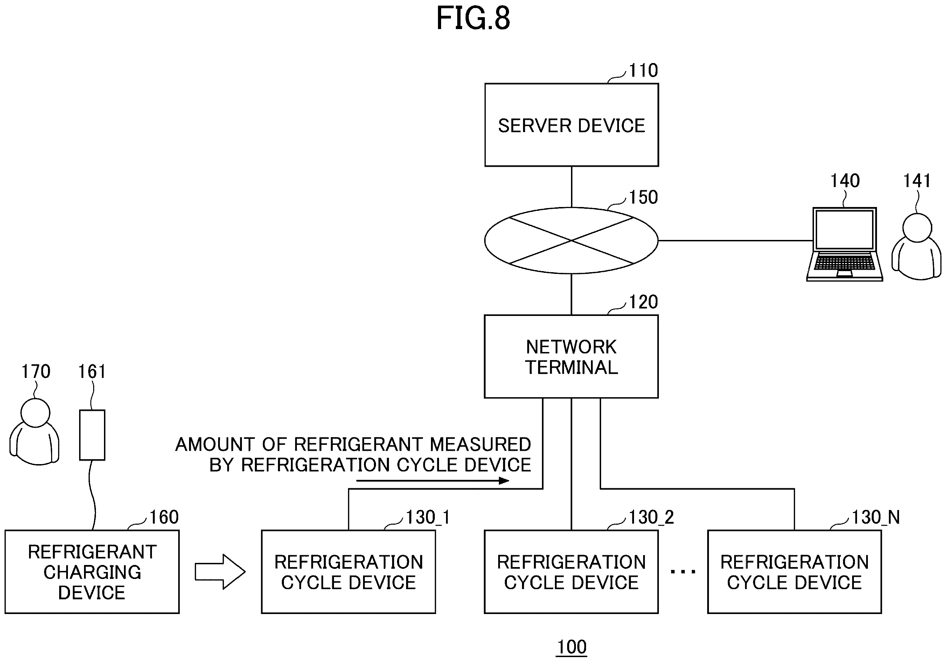

First, a system configuration of a refrigeration cycle system according to the second embodiment will be described. FIG. 8 is a second diagram illustrating an example of the system configuration of the refrigeration cycle system. The differences from the system configuration described using FIG. 1 in the first embodiments are as follows:
- there is no configuration in which the operator 170 transmits the amount of the replenished refrigerant measured by using the measuring instrument 161 to the refrigeration cycle device 130_1, the network terminal 120, or the server device 110 via the operator terminal; and
- the refrigeration cycle devices 130_1 to 130_N each transmit the amount of the refrigerant measured when the start-up process is performed to the server device 110 as the initial enclosed amount via the network terminal 120 instead of transmitting the amount of the refrigerant charged in advance.

### <Specific Example of Cost Calculation Process>

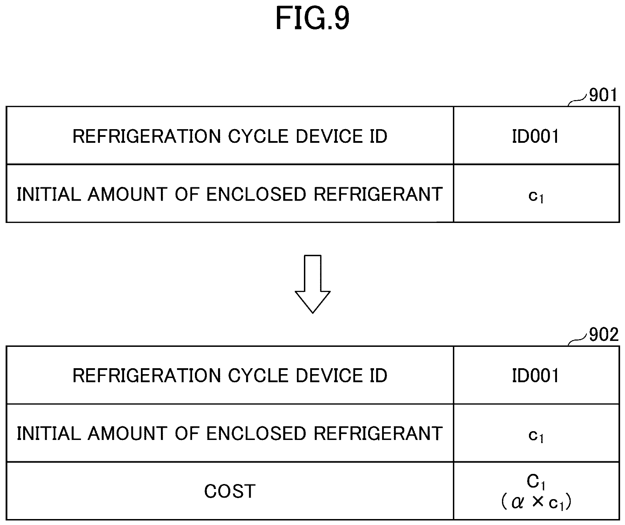

Next, a specific example of the cost calculation process performed by the refrigerant amount acquisition unit 401, the cost determination unit 402, and the notification unit 403 of the server device 110 will be described. FIG. 9 is a second diagram illustrating a specific example of the cost calculation process performed by the refrigerant amount acquisition unit, the cost determination unit, and the notification unit of the server device. As indicated by a reference numeral 901, in the second embodiment, the refrigerant amount acquisition unit 401 acquires:
- the identifier of the refrigeration cycle device 130_1 = "ID001"; and
- the initial amount of enclosed refrigerant = "c₁".

As indicated by the reference numeral 902, the cost determination unit 402 determines the cost = "C₁" corresponding to the initial amount of the enclosed refrigerant by multiplying the initial amount of the enclosed refrigerant = "c₁" by the unit price per unit amount of the refrigerant = "α".

### <Series of Processes of Refrigeration Cycle System>

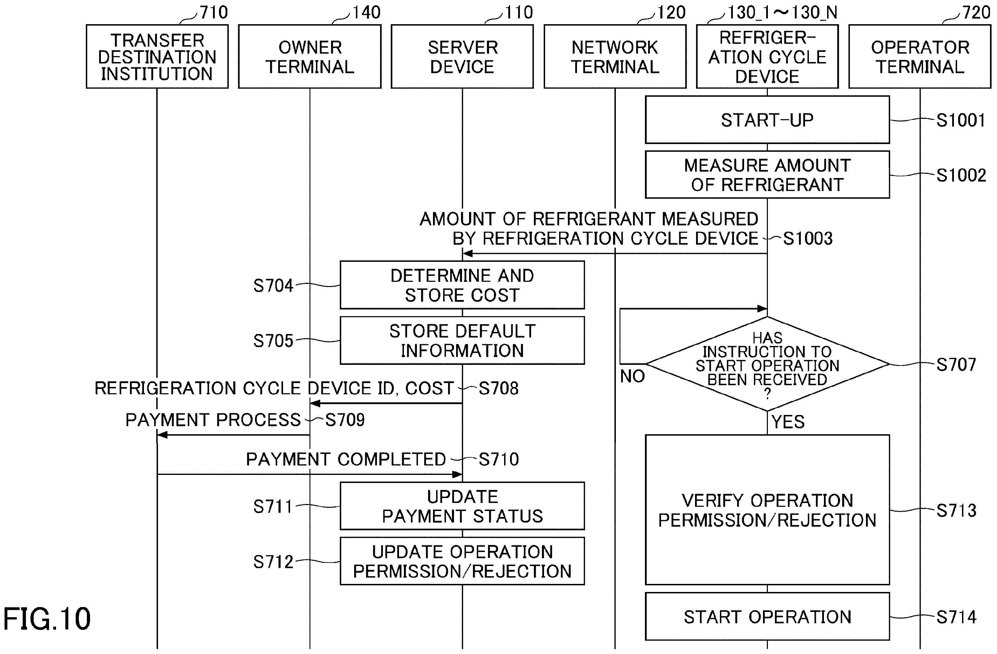

Next, a series of processes of the refrigeration cycle system 100 from installation of the refrigeration cycle devices 130_1 to 130_N to start of operation will be described. FIG. 10 is an example of a second sequence diagram illustrating a series of processes of the refrigeration cycle system. The differences from the first sequence diagram in the first embodiment that will be described with reference to FIG. 10 are steps S1001 to S1003.

In step S1001, the refrigeration cycle devices 130_1 to 130_N perform a start-up process.

In step S1002, the refrigeration cycle devices 130_1 to 130_N each measure the amount of the refrigerant in the refrigeration cycle devices 130_1 to 130_N. The method of measuring the amount of refrigerant in the refrigeration cycle device may be any method, and a conventionally known method, for example, a method disclosed in Japanese Unexamined Patent Application Publication No. 2011-64410 may be used.

In step S1003, the refrigeration cycle devices 130_1 to 130_N each transmit the measured amount of the refrigerant as the initial amount of the enclosed refrigerant to the server device 110 via the network terminals 120.

### <Conclusion>

As is clear from the above description, the server device 110 according to the second embodiment
- acquires an initial amount of enclosed refrigerant charged in the refrigeration cycle device (the amount of refrigerant measured by the refrigeration cycle device) and an identifier for identifying the refrigeration cycle device;
- determines a cost corresponding to an initial enclosed amount of refrigerant; and
- stores the initial amount of enclosed refrigerant, the cost corresponding to the initial amount of enclosed refrigerant, and the identifier in the cost storage unit in association with each other.

Thus, the server device 110 according to the second embodiment can implement a refrigerant rental mechanism, as in the first embodiment.

### [Third Embodiment]

The first embodiment describes that all the refrigerants enclosed in the refrigeration cycle devices 130_1 to 130_N in advance are used even during the operation at the time of installing the refrigeration cycle devices 130_1 to 130_N. However, not all the refrigerants enclosed in the refrigeration cycle devices 130_1 to 130_N in advance are used even during operation, and there are cases where part of the refrigerant is not used.

For example, it is assumed that the refrigeration cycle devices 130_1 to 130_N are models that can be compatible with the pipe length of the refrigerant pipe = Lm or less. In this case, the refrigeration cycle devices 130_1 to 130_N are charged with the amount of refrigerant corresponding to the refrigerant pipe length of Lm in advance. However, at the site where the refrigeration cycle devices 130_1 to 130_N are actually installed, the pipe length of the refrigerant pipe may be shorter than Lm.

In such a case, part of the refrigerant charged in advance in the refrigeration cycle devices 130_1 to 130_N is not used, and is stored in, for example, a container. In this case, the operator 170 transmits the amount of the refrigerant to be actually used to the refrigeration cycle device 130_1, the network terminal 120, or the server device 110 via the operator terminal 720.

In addition, in the first embodiment, the refrigeration cycle devices 130_1 to 130_N each transmit the amount of the refrigerant charged in advance to the server device 110 via the network terminal 120. However, the method of transmitting the amount of the refrigerant charged in advance to the server device 110 is not limited to this example, and for example, an administrator of the server device 110 may input the amount of the refrigerant to the server device 110 via the operation device 310.

In the first embodiment, the notification unit 403 transmits the cost corresponding to the initial amount of enclosed refrigerant in each refrigeration cycle device to the owner terminal 140. However, the method of transmission to the owner terminal 140 is not limited to this, and for example, the costs corresponding to the initial enclosed amounts of the refrigerant of the plurality of refrigeration cycle devices 130_1 to 130_N may be added up and transmitted to the owner terminal 140. In this case, the operation management unit 412 holds the operation permission/rejection = "not permitted" for all the refrigeration cycle devices 130_1 to 130_N until the payment status is updated to the payment status = "payment completed".

In the first embodiment, functions of the controller 207 in the case where the operator 170 transmits the amount of the replenished refrigerant to, for example, the refrigeration cycle device 130_1 are not described. However, the controller 207 may execute, for example, a plurality of modes.

Specifically, the controller 207 may execute the start-up mode. In this case, when the refrigeration cycle device 130_1 is activated in the start-up mode, the controller 207 transmits the amount of refrigerant charged in the refrigeration cycle device 130_1 in advance to the server device 110 via the network terminal 120 together with the identifier of the refrigeration cycle device 130_1. The amount of the replenished refrigerant is received by communicating with an operator terminal 720 owned by the operator 170. Further, the received refrigerant amount is transmitted to the server device 110 via the network terminal 120 together with the identifier of the refrigeration cycle device 130_1.

As described above, by activating the controller 207 in the start-up mode, the refrigeration cycle device 130_1 can transmit the initial amount of enclosed refrigerant (the amount of refrigerant charged in advance and the amount of replenished refrigerant) to the server device 110 in association with the identifier of the refrigeration cycle device 130_1.

In the first embodiment, the refrigeration cycle devices 130_1 to 130_N are replenished with the refrigerant. However, when the length of the refrigerant pipe is shorter than the length assumed in advance as a result of the installation work, the refrigerant is not replenished. In this case, the amount of the refrigerant charged in advance is the initial amount of the refrigerant to be enclosed. For example, in the example of FIG. 5, the initial amount of enclosed refrigerant = "c₁" = "a₁".

In the first and second embodiments, the refrigeration cycle system 100 includes the plurality of refrigeration cycle devices 130_1 to 130_N. However, the refrigeration cycle system 100 may include one refrigeration cycle device.

In the first and second embodiments, the case where the plurality of refrigeration cycle devices 130_1 to 130_N communicate with the server device 110 via the network terminal 120 has been described. However, the plurality of refrigeration cycle devices 130_1 to 130_N may communicate with the server device 110 without the network terminal 120.

Although the embodiments of the present disclosure have been described above, it should be understood that various changes in form and details are possible without departing from the spirit and scope of the accompanying claims.

The present application claims priority to Japanese Patent Application No. 2023-148637, filed on September 13, 2023, the entire contents of which are incorporated herein by reference.

### DESCRIPTION OF THE REFERENCE NUMERALS

- 100: refrigeration cycle system
- 120: network terminal
- 130_1 to 130_n: refrigeration cycle device
- 140: owner terminal
- 160: refrigerant charging device
- 207: controller
- 401: refrigerant amount acquisition unit
- 402: cost determination unit
- 403: notification unit
- 411: payment information acquisition unit
- 412: operation management unit
- 720: operator terminal

## Claims

1. A server device comprising:
a control unit; and
a storage unit, wherein the control unit
acquires an amount of refrigerant enclosed in a refrigeration cycle device and an identifier for identifying the refrigeration cycle device,
determines a cost corresponding to the amount of refrigerant, and
stores, in the storage unit, the amount of refrigerant, the cost, and the identifier in association with each other.

2. The server device according to claim 1, wherein the control unit notifies a manager of the refrigeration cycle device of the cost.

3. The server device according to claim 1 or 2, wherein
the control unit acquires an amount of refrigerant used in the refrigeration cycle device, out of the amount of refrigerant enclosed in the refrigeration cycle device before a start of operation of the refrigeration cycle device.

4. The server device according to claim 3, wherein the amount of refrigerant enclosed in the refrigeration cycle device includes
an amount of refrigerant charged in the refrigeration cycle device in advance before the refrigeration cycle device is installed, and
an amount of replenished refrigerant before operation is started, the refrigeration cycle device being installed.

5. The server device according to any one of claims 1 to 4,
wherein the control unit permits an operation of the refrigeration cycle device on condition that the cost has been paid, and
wherein the refrigeration cycle device starts operation when the operation is permitted.

6. A refrigeration cycle system comprising:
a first control unit configured to manage a refrigeration cycle device; and
a server device including a second control unit and a storage unit, the second control unit being configured to communicate with the first control unit,
wherein the second control unit
acquires, via the first control unit, an amount of refrigerant enclosed in the refrigeration cycle device and an identifier for identifying the refrigeration cycle device,
determines a cost corresponding to the amount of refrigerant, and
stores, in the storage unit, the amount of refrigerant, the cost, and the identifier in association with each other.

7. The refrigeration cycle system according to claim 6, wherein the refrigeration cycle device measures the amount of refrigerant enclosed therein, and transmits the measured amount of refrigerant to the second control unit via the first control unit in association with the identifier.

8. The refrigeration cycle system according to claim 6 or 7, wherein the amount of the refrigerant enclosed in the refrigeration cycle device includes
an amount of the refrigerant charged in the refrigeration cycle device in advance before the refrigeration cycle device is installed, and
an amount of the refrigerant replenished before operation is started, the refrigeration cycle device being installed.

9. A management method comprising:
causing a control unit to:
acquire an amount of refrigerant enclosed in a refrigeration cycle device and an identifier for identifying the refrigeration cycle device;
determine a cost corresponding to the amount of refrigerant; and
store the amount of refrigerant, the cost, and the identifier in a storage unit in association with each other.

10. A management program for causing a control unit to execute a process, the process including:
acquiring an amount of a refrigerant enclosed in a refrigeration cycle device and an identifier for identifying the refrigeration cycle device;
determining a cost corresponding to the amount of refrigerant; and
storing the amount of refrigerant, the cost, and the identifier in a storage unit in association with each other.
